# FASCICULE DE BREVET EUROPEEN

(11) **EP 2 336 572 B1**
(45) Date de publication et mention de la délivrance du brevet: **25.07.2012**
(21) Numéro de dépôt: 09179128.5
(22) Date de dépôt: 14.12.2009
(51) Int. Cl.: F04D 29/16, F01D 11/12, F01D 5/26

(54) **Virole en deux parties pour étage à aubes d'un compresseur axial**
Zweiteiliges Gehäuse für einen Stromdiffusor eines Axialkompressors
Shroud or section of shroud in two parts for a vane diffuser of an axial compressor

(43) Date de publication de la demande: 22.06.2011
(73) Titulaire: Techspace Aero S.A., 4041 Herstal (Milmort) (BE)
(72) Inventeur: Lhoest, André, 4500 Huy (BE); Remy, Christophe, 4347 Fexhe-Le-Haut-Clocher (BE)
(74) Mandataire: Lecomte, Didier

(56) Documents cités:
- EP-A1- 2 075 415
- DE-A1-102008 019 890
- FR-A1- 2 896 019

## Description

### Domaine technique

L'invention a trait à une virole de redresseur à aubes d'un compresseur axial, plus particulièrement à une virole interne de redresseur, plus particulièrement encore à une virole interne en matériau composite. De tels compresseurs sont typiquement présents dans des turboréacteurs, turbopropulseurs et générateurs de gaz.

### Technique antérieure

Un compresseur axial comporte typiquement une série d'étages de compression, chacun étant constitué d'un agencement circonférentiel d'aubes montées à leurs bases sur un rotor. Un stator servant de carter enveloppe le rotor et les aubes. Les extrémités des aubes du rotor se déplacent à proximité de la surface interne du stator. Le fluide, typiquement de l'air, est ainsi déplacé et comprimé selon une veine annulaire concentrique à l'axe de rotation du rotor. Le rotor comporte ainsi plusieurs rangées d'aubes circonférentielles distantes les unes des autres. Des rangées d'aubes fixes sont montées sur le stator entre les rangées d'aubes du rotor dans le but de redresser le flux d'air entre deux étages du compresseur. Ces aubes de redresseur comportent typiquement une virole interne à leurs extrémités dans le but de former une délimitation de l'enveloppe intérieure de la veine fluide. Cette virole est typiquement de forme annulaire avec une surface extérieure spécialement profilée pour la délimitation du flux. La surface extérieure comporte une série d'ouvertures ou ajours destinés à recevoir les extrémités intérieures des aubes qui sont par ailleurs fixées à leurs extrémités extérieures ou bases au stator. Cette virole assure également une solidarisation des aubes entre elles au niveau de leurs extrémités intérieures. La face interne de la virole est garnie d'un matériau friable ou encore dit plus couramment « abradable » selon l'expression anglaise. Cette couche d'abradable est apte à coopérer par frottement avec une ou plusieurs nervures circonférentielles sur le rotor en vue d'assurer une certaine étanchéité. Ces nervures sont plus couramment appelées léchettes.

Le document EP 2075415 A est considéré comme le document décrivant l'état de la technique antérieure le plus proche.

Le document de brevet EP 1 213 484 A1 du même déposant que cette demande divulgue une virole interne et une virole externe d'un étage redresseur d'un compresseur, ces viroles étant de construction classique en matériau métallique. Ce document à trait à un dispositif de liaison des aubes aux viroles au moyen d'un bandeau qui est inséré dans des ouvertures pratiquées à chaque extrémité des aubes passant outre les ajours des viroles, le bandeau servant de clé de verrouillage par rapport aux faces extérieure et intérieure des viroles externe et interne, respectivement.

En fonction des dimensions et des matériaux utilisés et également pour des raisons de facilité de montage, il peut être intéressant de segmenter la virole en plusieurs sections. En effet, dans le cas de la réalisation d'une virole en matériau composite, par exemple, il peut s'avérer difficile d'injecter la résine du matériau composite sur de longues pièces si bien que la segmentation de la virole en vue de réduire la longueur des sections est intéressante. La segmentation de la virole peut s'avérer également intéressante en vue de compenser les dilatations différentielles au niveau des aubes elles-mêmes et de parties du stator supportant les aubes. Les performances aérodynamiques d'une virole composite segmentée sont réduites pour les raisons suivantes :

Le mode de fabrication par injection de plastique ou résine impose l'utilisation d'un moule pour donner la forme définitive. La forme générale d'une section est en arc de cercle alors que la direction de démoulage sur une face de la section est axiale et non radiale. Les ajours de la virole présentent des axes principaux qui correspondent à des rayons partant de l'axe de rotation du rotor ; ces axes sont donc inclinés par rapport à la direction de démoulage. Par conséquent, les ajours présenteront une section inutilement évasée vers la direction de démoulage. L'ajustement entre les ajours de la virole et les aubes sera ainsi inutilement large et défavorable d'un point de vue aérodynamique. Il est en effet souhaitable que la surface de la virole en contact avec la veine fluide, notamment au niveau de la jonction avec les aubes soit la plus continue possible.

De plus, indépendamment de cette contrainte liée au démoulage, les ajours d'une virole composite segmentée doivent être prévus un peu plus grands que la section des aubes qui les traversent en raison du processus de montage. En effet, une fois une première section mise en place, il est nécessaire de la faire remonter le long des aubes afin de ménager un minimum de place pour l'extrémité adjacente de la section suivante à mettre en place, pour ensuite faire redescendre la première section vers sa position finale. L'augmentation du jeu entre les ajours et les aubes, en particulier au niveau de la surface extérieure, est néfaste pour l'aérodynamique de l'étage redresseur.
L'invention a pour objectif de proposer une virole palliant au moins un des problèmes sus mentionnés, plus particulièrement de proposer une virole facile à monter et garantissant de bonnes caractéristiques aérodynamiques.

### Résumé de l'invention

L'invention consiste en une virole ou section de virole en matériau composite pour étage redresseur à aubes d'un compresseur axial, la virole ou section de virole étant destinée à recevoir une extrémité des aubes; comprenant: au moins un premier élément courbe avec au moins une première encoche correspondant à une première partie du contour de l'extrémité des aubes; au moins un deuxième élément courbe de forme généralement similaire à celle du premier élément courbe avec au moins une deuxième encoche correspondant à une deuxième partie du contour de l'extrémité des aubes, la ou les premières et deuxièmes encoches formant une ou plusieurs paires d'encoches; les premier et deuxièmes éléments courbes étant destinés à être disposés l'un contre l'autre axialement de manière à emprisonner le profil de l'extrémité des aubes dans chaque paire de première et deuxième encoches. La deuxième partie du contour de l'extrémité des aubes correspond préférentiellement au reste du contour qui n'est pas concerné par la première partie, de manière à ce que les première et deuxième encoches couvrent la totalité du contour des aubes.

Une telle construction présente de nombreux avantages, essentiellement d'un point de vue facilité de montage sur les aubes et d'un point de vue aérodynamique de l'écoulement de la veine fluide dans le redresseur.

En effet, cette construction modulaire avec les paires d'encoches formant les ajours de la virole permet un montage sensiblement plus aisé en comparaison avec une virole segmentée classique dont chaque section doit être mise en place avec soin devant la série d'aubes auxquelles elle doit être montée et doit être ensuite remontée le long des aubes au niveau d'une extrémité latérale afin de laisser suffisamment de place pour l'extrémité adjacente de la section suivante.

De plus, cette construction modulaire permet d'utiliser une autre façon de démouler les segments en matériau composite en s'acquittant de la contrainte inévitable avec les segments d'une virole classique de démouler dans une direction formant un angle avec les directions principales de certains des ajours ainsi formés. Les ajours de chaque segment d'un virole classique sont en effet différents les uns des autres afin de tenir compte de la projection de l'aube suivant la direction d'assemblage. Ces différences conduisent à des ajustements de montage trop larges ayant un effet néfaste sur l'aérodynamique de l'écoulement.

Chaque élément courbe formant la virole comprend au moins deux préférentiellement au moins trois, plus préférentiellement encore au moins quatre encoches.

Selon un mode avantageux de l'invention, les premier et second éléments courbes comprennent, chacun, un bord d'assemblage dans un plan perpendiculaire à l'axe principal du compresseur, les bords d'assemblage étant aptes à venir en contact mutuel lors de l'assemblage des deux éléments courbes préférentiellement par rapprochement dans une direction correspondant approximativement à la direction d'écoulement.

Selon un autre mode avantageux de l'invention, la première et/ou deuxième partie du contour de l'extrémité des aubes correspond à approximativement la moitié du profil dans le sens de l'écoulement. Cette mesure permet aux ajours d'épouser des aubes à profil en tonneau.

Selon un encore autre mode avantageux de l'invention, le premier élément courbe comprend un bord d'assemblage apte à coopérer par insertion avec un bord d'assemblage du deuxième segment lors de l'assemblage des deux éléments courbes préférentiellement par rapprochement dans une direction correspondant approximativement à la direction d'écoulement.

Selon un encore autre mode avantageux de l'invention, le bord d'assemblage d'un des premier et deuxième éléments courbes comprend une rainure selon la direction courbe et le bord d'assemblage de l'autre des premier et deuxième éléments courbes comprend une partie en saillie, la rainure et la partie en saillie étant interrompues par la ou les encoches respectives des premier et deuxième éléments courbes.

Selon un encore autre mode avantageux de l'invention, la virole est une virole interne avec une section en forme de U avec l'ouverture du U dirigée vers le centre de la virole de manière à former une cavité apte à recevoir de la matière abradable et où la frontière entre les premier et deuxième éléments courbes se situe approximativement vers le centre du U.

Selon un encore autre mode avantageux de l'invention, les premier et deuxième éléments courbes comprennent, chacun, des moyens de fixation mutuelle, ces moyens étant préférentiellement du type à clipsage.

Selon un encore autre mode avantageux de l'invention, les moyens de fixation mutuelle sont tels qu'ils coopèrent par engagement élastique de surfaces à contact positif lors du rapprochement des premier et deuxième éléments courbes dans une direction correspondant approximativement à la direction d'écoulement.

Selon un encore autre mode avantageux de l'invention, les moyens de fixation mutuelle comprennent plusieurs éléments en saillie sur un des premier et deuxième éléments courbes dans une direction correspondant approximativement à la direction de rapprochement des premier et deuxième éléments courbes.

Selon un encore autre mode avantageux de l'invention, les moyens de fixation mutuelle sont disposés sous les bords d'assemblage respectifs des premier et deuxième éléments courbes.

Selon un encore autre mode avantageux de l'invention, chaque extrémité de la section de virole comporte une section dont le profil correspond à celui de l'extrémité des aubes de sorte à ce que la jonction entre deux sections adjacentes corresponde au profil de l'aube.

Selon un encore autre mode avantageux de l'invention, chaque extrémité de la section de virole comporte des moyens de liaison avec une section adjacente, ces moyens de liaison étant à contact positif, préférentiellement de part et d'autre de la jonction sur chacun des premier et deuxième éléments courbes.

Selon un encore autre mode avantageux de l'invention, les premier et deuxième éléments courbes ont, chacun, une forme d'anneau, préférentiellement fermé.

Selon un encore autre mode avantageux de l'invention, l'un des premier et deuxième éléments courbes a une forme d'anneau, préférentiellement fermé, et en ce qu'il comprend plusieurs deuxièmes éléments courbes correspondant à des sections de l'anneau et destinés à être disposés de manière successive contre l'élément courbe en forme d'anneau de manière à emprisonner sur tout le pourtour de l'anneau le profil du pied des aubes dans chaque paire de première et deuxièmes encoches.

L'invention consiste également en une virole pour étage redresseur à aubes d'un compresseur axial, comprenant plusieurs sections de virole telles que décrites ci-avant.

### Brève description des dessins

La figure 1 est une vue partielle en coupe d'un compresseur axial avec, entre autres, une virole selon l'invention.

La figure 2 est une vue en perspective d'une section de virole selon l'invention.

La figure 3 est une vue en perspective selon un autre angle de la section de la virole selon la figure 1 montée sur une rangée d'aubes.

La figure 4 est une vue en perspective du dessous de la section de virole de la figure 3.

### Description des modes de réalisation

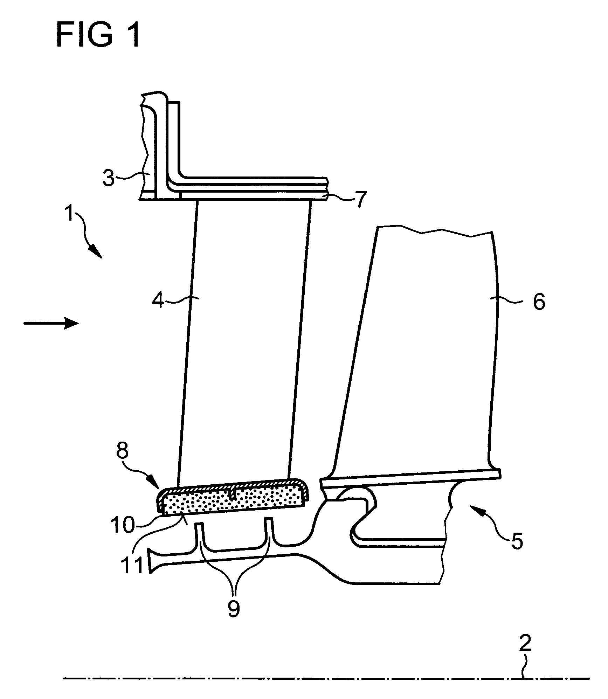

La figure 1 illustre une vue en coupe d'une partie d'un compresseur axial, typiquement de moteur à réaction ou moteur à turbine. Le compresseur comporte un rotor 5 tournant autour de l'axe 2. Le rotor comporte une série d'aubes 6 fixées sur sa circonférence, correspondant à un étage du compresseur. La direction et le sens d'écoulement du fluide à comprimer sont illustrés par la flèche. Le carter 3 ou encore stator du compresseur comporte une série d'aubes 4 fixées à leurs bases. Cette série d'aubes constitue un redresseur de la veine fluide située entre deux rangées d'aubes de la roue mobile, la rangée amont n'étant pas représentée. Une rangée d'aubes de la roue mobile et la grille redresseur en aval constituent un étage du compresseur. Les extrémités intérieures des aubes 4 sont liées à une virole 8. La virole a une forme générale d'anneau circulaire épousant le rotor 5. La virole 8 délimite ainsi la partie inférieure ou interne de la veine fluide annulaire traversant le redresseur. Elle est maintenue en place par les aubes et assure une étanchéité avec le rotor 5. La virole comporte sur sa face intérieure une couche d'abradable 10. Le rotor 5 comporte deux nervures circonférentielles ou plus couramment désignées léchettes 9 coopérant avec la couche de matériau friable 10. L'abradable 10 est appliqué et ensuite usiné de sorte à présenter une surface d'étanchéité 11 coopérant avec les léchettes. Ce matériau a des propriétés de friction avec le métal des léchettes et a la capacité de se désagréger en fine poussière en cas de contact avec les léchettes lorsque le rotor est en rotation. Les léchettes 9 et la surface 11 en matériau friable constituent ainsi un labyrinthe d'étanchéité.

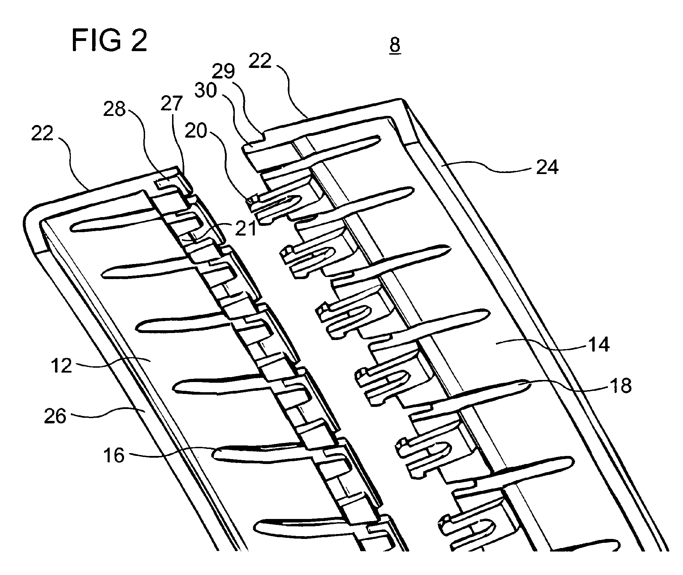

La virole 8 est constituée d'une série de sections en forme d'arc de cercle telles qu'illustrées à la figure 2. La section illustrée à la figure 2 est constituée de deux éléments en arc de cercle 12 et 14 formant, chacun, environ une moitié, dans une direction correspondant à celle de l'axe de la machine, de la section de virole selon un arc de cercle médian.

L'élément courbe 12 comprend une série d'encoches 16 destinées à épouser le profil de l'extrémité correspondante des aubes. Les encoches 16 sont en principe identiques compte tenu du fait que toutes les aubes d'un étage redresseur sont généralement identiques et réparties de manière uniforme sur la circonférence de la virole. Les encoches 16 sont telles qu'elles correspondent à environ une moitié du profil des aubes, la moitié étant dans une direction générale correspondant à la direction d'écoulement du fluide ou encore à la direction longitudinale de la section d'une aube. L'élément courbe 12 comprend une surface extérieure 22 de révolution, correspondant généralement à un segment ou morceau de cylindre, c'est-à-dire une surface dirigée vers l'extérieur du cercle ou anneau que forme la virole complète. Cette surface est la surface délimitant l'enveloppe intérieure de la veine fluide traversant le redresseur. Elle est délimité d'un côté par un bord arrondi 26 et de l'autre par un bord 27 traversant les encoches 16 et destiné à venir en contact avec un bord correspondant 29 de l'autre élément courbe 14. Ce bord de contact 27 comprend une rainure 28 s'étendant parallèlement à la surface extérieure 22 et en dessous de cette surface. La rainure 28, tout comme le bord 27, est interrompue par les encoches 16.

L'élément courbe 14 opposé à l'élément courbe 12 est généralement similaire. Il comprend une série d'encoches 18 correspondant aux encoches 16 de l'élément courbe 12 opposé et destinées à former, lorsque les deux éléments courbes sont disposés de manière adjacente et en correspondance, une série d'ajours ou ouvertures qui vont épouser les aubes. La forme des encoches 18 correspond ainsi au reste de la section des aubes, c'est-à-dire au à la partie du contour de l'aube qui n'est pas couvert pour l'encoche 16 de l'élément courbe opposé 12. Les encoches 18 peuvent par conséquent présenter un profil légèrement, voire sensiblement différent de celui des encoches opposées 16, et ce en fonction de la section de l'extrémité d'aube qui est à entourer. Similairement à l'élément courbe opposé 12, l'élément courbe 14 comprend une surface extérieure 22 généralement cylindrique ou annulaire, c'est-à-dire une surface dirigée vers l'extérieur du cercle ou anneau que forme la virole complète. Cette surface est la surface délimitant l'enveloppe intérieure de la veine fluide traversant le redresseur. Elle est délimitée d'un côté par un bord arrondi 24 et de l'autre par un bord 29 traversant les encoches 18 et destiné à venir en contact avec le bord correspondant 27 de l'élément courbe opposé 12. Ce bord de contact 29 comprend une languette 30 ou tenon s'étendant parallèlement à la surface extérieure 22 et à un niveau inférieur à cette surface. La languette 30, tout comme le bord 29, est interrompue par les encoches 18.

L'élément courbe 14 comprend également au niveau de son bord de contact 29, à un niveau inférieur à celui de la surface extérieure 22, une série de crochets élastiques dirigés généralement vers l'élément courbe opposé 12 lors de l'assemblage et aptes à coopérer par flexion suive d'un mouvement de retour à une position proche de la position initiale avec des logements correspondants prévus au niveau du bord de contact 27 de l'élément courbe opposé 12. Ces crochets sont disposés par paires avec un profil généralement en U dirigé vers l'extérieur et où les extrémités des branches du U comportent, chacune, un bossage formant le crochet proprement dit avec une surface inclinée par rapport à la direction d'insertion des crochets dans leurs logements 21 de l'éléments courbe opposé et avec une surface généralement perpendiculaire à cette direction et étant apte à entrer en contact positif avec une surface correspondante des logements. Les bossages en questions sont disposés, à chaque extrémité des deux branches du U et de manière à être dirigés latéralement vers l'extérieur du U.

La section de virole est prévue pour être montée par assemblage des deux éléments autour des aubes. En pratique, les deux éléments 12 et 14 sont disposés l'un en face de l'autre similairement à l'illustration de la figure 2, et ce en engageant au préalable chacun des éléments avec la rangée d'aubes qui est destinée à être fixée à cette section de virole. Une fois que chaque élément est engagé avec la rangée d'aubes, c'est-à-dire lorsque les encoches de chaque élément coopèrent au moins partiellement avec les aubes, le mouvement de rapprochement des deux éléments est très facile car guidé, du moins dans un plan généralement tangent à la surface extérieure 22 de la virole, par les aubes. Une mise en correspondance des bords de contact 27 et 29 respectifs peut requérir un ou des mouvements dans une direction perpendiculaire au plan tangent à la surface extérieure 22 de la virole. La languette 30 de l'élément 14 est disposée en face de la rainure 28 de l'élément opposé 12 de manière à assurer un guidage sûr lors de l'assemblage. La fixation mutuelle des deux éléments se fait par l'application d'un effort de rapprochement des bords de contact de sorte à faire pénétrer les crochets résilients dans les logements respectifs jusqu'à que les parties avec les surfaces de contact positif passent outre les surfaces correspondantes des logements. Les branches peuvent ensuite reprendre une position proche de celle avant insertion et où les surfaces à contact positif des crochets sont en prise avec les surfaces correspondantes des logements.

Alternativement, la section de virole peut être assemblée avant le montage sur les aubes. Les éléments 12 et 14 sont alors assemblés par un mouvement similaire à celui décrit ci-avant mais sans la présence des aubes. La section est ensuite montée pré assemblée sur les aubes. Cette principe de montage procure, tout comme le principe de montage précédent et décrit en détail au paragraphe précédent, l'avantage de permettre la réalisation d'un virole avec des ajours avec un profil très ajusté au profil des aubes en s'acquittant des contraintes qu'impose le démoulage d'une section de virole classique aux ajours. Le démoulage d'une section de virole classique se fait généralement par éloignement d'une partie de moule correspondant à la surface extérieure et aux ajours sur au moins une partie de l'épaisseur de la virole depuis la surface extérieure. La nature courbée de la section de virole fait que les axes des ajours correspondent à des rayons de la virole et peuvent ainsi former un angle avec la direction de démoulage. Cette contrainte impose une section des ajours d'avantage évasée que requis pour le montage. Le principe de montage précédent et décrit en détail au paragraphe précédent présente cependant les avantages supplémentaires que l'assemblage de la virole ainsi que son montage sur les aubes sont rendus plus faciles.

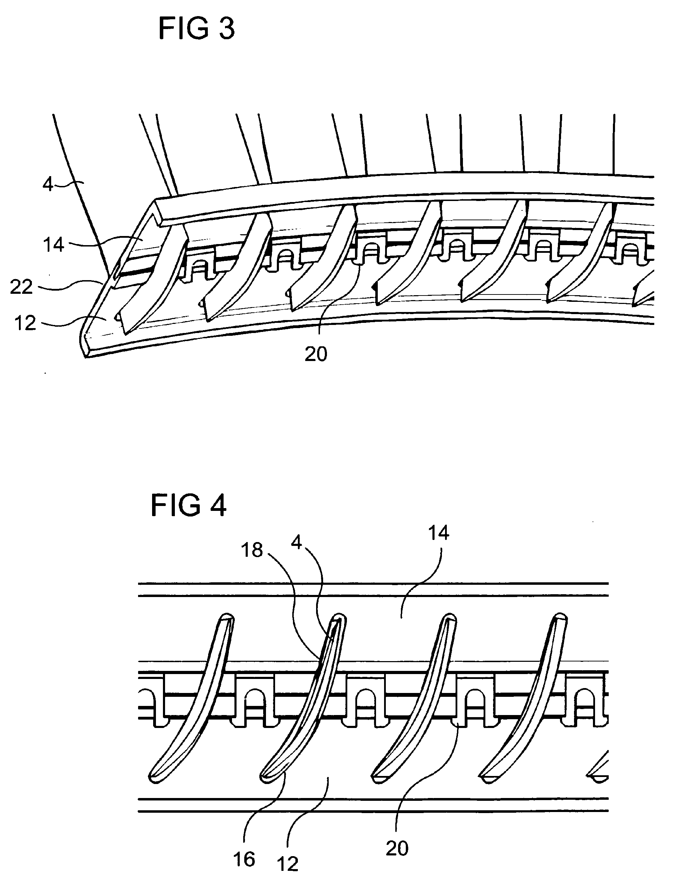

La figure 3 illustre la section de virole de la figure 2 dans son état assemblé et monté sur une rangée d'aubes 4. On observe que la surface extérieure 22 de la virole 8 reste continue et régulière au niveau de la jonction. La fixation mutuelle est garantie par la présence d'une paire de crochets élastiques 20 entre chaque paire d'aubes voisines. Les aubes 4 peuvent être fixées à la virole par application d'une colle ou d'un élastomère faisant office de colle assurant une double fonction, à savoir celle d'assurer une liaison mécanique et celle d'assurer une étanchéité. Pour ce faire les extrémités d'aubes dépassent légèrement sous les ajours de manière à pouvoir recevoir la colle ou l'élastomère.

Il est à noter que d'autres modes de liaison mécanique entre les aubes et la viroles sont envisageables. En effet, il est tout-à-fait envisageable de prévoir la mise en place d'un bandeau au travers d'orifices pratiqués dans les extrémités d'aubes afin d'assurer une liaison mécanique empêchant la sortie des aubes de la virole, tel que divulgué dans le document EP 1 213 484 A1 discuté dans la partie « Technique antérieure ». Dans ce cas, il serait alors plus pratique de prévoir la mise en place du bandeau avant l'assemblage de la virole sur les aubes.

La figure 3 illustre également la section en U avec la partie ouverte dirigée vers le centre de la virole, formant une cavité destinée à recevoir la matière abradable sous forme de pâte par projection ou par tout autre procédé équivalent ou similaire.

La figure 4 est une vue agrandie d'une partie du dessous de la section de virole montée sur des aubes illustrée à la figure 3. Elle illustre bien la finesse d'ajustement entre les ajours formés par les paires d'encoches 16 et 18 et les aubes 4. Le fait que chaque encoche d'une paire d'encoches 16 et 18 formant un ajour entoure l'aube sur approximativement une moitié de sa longueur (selon la direction d'écoulement) permet un ajustement précis des ajours sur des aubes à section en tonneau, c'est-à-dire des aubes dont la section est sensiblement plus épaisse au milieu qu'aux bords (d'attaque et de fuite).

Les sections de virole telles qu'illustrées aux figures 2, 3 et 4 peuvent avoir des extrémités avec un profil correspond à celui de l'extrémité des aubes de sorte à ce que la jonction entre deux sections adjacentes corresponde au profil de l'aube (non représenté). Préférentiellement, chaque extrémité de section de virole comporte des moyens de liaison avec une section adjacente, ces moyens de liaison étant du type à contact positif, préférentiellement de part et d'autre de la jonction sur chacun des éléments courbes formant une section. Ce contact positif intervient idéalement par un mouvement relatif de glissement le long des aubes entre deux sections adjacentes.

Il est à noter que la forme, le nombre et la position des crochets élastiques en guise de moyens de fixation mutuelle des éléments courbés sont purement exemplatives. En effet, diverses alternatives similaires et/ou équivalentes à ces moyens de fixation sont possibles, en fonction de divers paramètres comme le choix de matériaux, les contraintes de fabrication (moulage/démoulage pour les matériaux non métalliques), facilité de montage et de démontage, résistance au démontage désirée.

Il est également à noter que la virole peut être faite de deux éléments du type de ceux décrits précédemment, à savoir les éléments courbes 12 et 14, formant chacun un anneau complet. Ces éléments formeront préférentiellement un anneau fermé. Alternativement, la virole peut être composée d'un premier élément formant un anneau complet et préférentiellement fermé, et d'une série d'éléments courbes destinés à être disposés contre le premier élément et de manière adjacente les uns les autres le long de la circonférence du premier élément.

Il est également à noter qu'il est bien sûr envisageable d'appliquer la virole selon l'invention à un étage redresseur dont les aubes ne sont pas nécessairement toutes identiques et/ou réparties de manière uniforme sur toute la circonférence. Dans ce cas, les ajours formés par les paires d'encoches ne seront pas répartis uniformément mais bien selon les aubes du redresseur.

Il également à noter que bien que l'exemple de réalisation de l'invention ait été décrit en relation avec une virole interne, l'invention est similairement applicable à une virole externe.

## Revendications

1. Virole ou section de virole en matériau composite pour étage redresseur à aubes (4) d'un compresseur axial, la virole ou section de virole (8) étant destinée à recevoir une extrémité des aubes;
**caractérisée en ce qu'**elle comprend:
au moins un premier élément courbe (12) avec au moins une première encoche (16) correspondant à une première partie du contour de l'extrémité des aubes (4) ;
au moins un deuxième élément courbe (14) de forme généralement similaire à celle du premier élément courbe (12) avec au moins une deuxième encoche (18) correspondant à une deuxième partie du contour de l'extrémité des aubes, la ou les premières et deuxièmes encoches (16, 18) formant une ou plusieurs paires d'encoches;
les premier et deuxièmes éléments courbes (12, 14) étant destinés à être disposés l'un contre l'autre axialement de manière à emprisonner le profil de l'extrémité des aubes (4) dans chaque paire de première et deuxièmes encoches (16, 18).

2. Virole ou section de virole selon la revendication précédente, **caractérisée en ce que** les premier et second éléments courbes (12, 14) comprennent, chacun, un bord d'assemblage (27, 29) dans un plan perpendiculaire à l'axe principal du compresseur apte à venir en contact mutuel lors de l'assemblage des deux éléments courbes préférentiellement par rapprochement dans une direction correspondant approximativement à la direction d'écoulement.

3. Virole ou section de virole selon l'une des revendications précédentes, **caractérisée en ce que** la première et/ou deuxième partie du contour de l'extrémité des aubes (4) correspond à approximativement la moitié du profil de l'extrémité des aubes (4) dans le sens de l'écoulement.

4. Virole ou section de virole selon l'une des revendications précédentes, **caractérisée en ce que** le premier élément courbe (12) comprend un bord d'assemblage (28) apte à coopérer par insertion avec un bord d'assemblage (30) du deuxième segment (14) lors de l'assemblage des deux éléments courbes (12, 14) préférentiellement par rapprochement dans une direction correspondant approximativement à la direction d'écoulement.

5. Virole ou section de virole selon la revendication précédente, **caractérisée en ce que** le bord d'assemblage d'un des premier et deuxième éléments courbes comprend une rainure (28) selon la direction courbe et le bord d'assemblage de l'autre des premier et deuxième éléments courbes comprend une partie en saillie (30), la rainure et la partie en saillie étant interrompues par la ou les encoches (16, 18) respectives des premier et deuxième éléments courbes (12, 14).

6. Virole ou section de virole selon l'une des revendications précédentes, **caractérisée en ce que** la virole (8) est une virole interne avec une section en forme de U avec l'ouverture du U dirigée vers le centre de la virole de manière à former une cavité apte à recevoir de la matière abradable et où la frontière entre les premier et deuxième éléments courbes se situe approximativement vers le centre du U.

7. Virole ou section de virole selon l'une des revendications précédentes, **caractérisée en ce que** les premier et deuxième éléments courbes (12, 14) comprennent, chacun, des moyens de fixation mutuelle (20, 21), ces moyens étant préférentiellement du type à clipsage.

8. Virole ou section de virole selon la revendication précédente, **caractérisée en ce que** les moyens de fixation mutuelle (20, 21) sont tels qu'ils coopèrent par engagement élastique de surfaces à contact positif lors du rapprochement des premier et deuxième éléments courbes (12, 14) dans une direction correspondant approximativement à la direction d'écoulement.

9. Virole ou section de virole selon la revendication précédente, **caractérisé en ce** les moyens de fixation mutuelle (20, 21) comprennent plusieurs éléments en saillie sur un des premier et deuxième éléments courbes dans une direction correspondant approximativement à la direction de rapprochement des premier et deuxième éléments courbes.

10. Virole ou section de virole selon l'une des revendications 4 et 5 et l'une des revendications 7 à 9, **caractérisé en ce que** les moyens de fixation mutuelle (20, 21) sont disposés sous les bords d'assemblage respectifs (28, 30) des premier et deuxième éléments courbes.

11. Section de virole selon l'une des revendications précédentes, **caractérisée en ce que** chaque extrémité de la section de virole comporte une section dont le profil correspond à celui de l'extrémité des aubes de sorte à ce que la jonction entre deux sections adjacentes corresponde au profil de l'aube.

12. Section de virole selon la revendication précédente, **caractérisée en ce que** chaque extrémité de la section de virole comporte des moyens de liaison avec une section adjacente, ces moyens de liaison étant à contact positif, préférentiellement de part et d'autre de la jonction sur chacun des premier et deuxième éléments courbes.

13. Virole selon l'unes des revendications précédentes, **caractérisée en ce que** les premier et deuxième éléments courbes (12, 14) ont, chacun, une forme d'anneau, préférentiellement fermé.

14. Virole selon l'unes des revendications précédentes, **caractérisée en ce que** l'un des premier et deuxième éléments courbes a une forme d'anneau, préférentiellement fermé, et **en ce qu'**il comprend plusieurs deuxièmes éléments courbes correspondant à des sections de l'anneau et destinés à être disposés de manière successive contre l'élément courbe en forme d'anneau de manière à emprisonner sur tout le pourtour de l'anneau le profil du pied des aubes dans chaque paire de première et deuxièmes encoches.

15. Virole pour étage redresseur à aubes d'un compresseur axial, comprenant plusieurs sections de virole selon l'une des revendications précédentes.

## Claims

1. Shell or shell section of composite material for stator blade stage (4) of an axial compressor, the shell or shell section (8) being designed to fit over a blade tip;
**characterised in that** it comprises:
at least one first curved element (12) with at least one slot (16) corresponding to a first part of the blade tip contour (4);
at least one second curved element (14) generally similar in shape to the first curved element (12) with at least one second slot (18) corresponding to a second part of the blade tip contour, the first and the second slots (16, 18) forming one or more pairs of slots;
the first and second curved elements (12, 14) being intended to be arranged against one another axially so as to grip the blade tip profile (4) in each pair of first and second slots (16, 18).

2. Shell or shell section according to the preceding claim, **characterised in that** the first and second curved elements (12, 14) each comprise a connecting edge (27, 29) in a plane perpendicular to the main axis of the compressor capable of coming into mutual contact during assembly of the two curved elements preferably by mating in a direction corresponding approximately to the direction of flow.

3. Shell or shell section according to one of the preceding claims, **characterised in that** the first and/or second part of the blade tip contour (4) corresponds to approximately half the blade tip profile (4) in the direction of flow.

4. Shell or shell section according to one of the preceding claims, **characterised in that** the first curved element (12) comprises a connecting edge (28) that mates with a connecting edge (30) on the second segment (14) during assembly of the two curved elements (12, 14) preferably by mating in a direction corresponding approximately to the direction of flow.

5. Shell or shell section according to the preceding claim, **characterised in that** the connecting edge on one of the first or second curved elements comprises a groove (28) in the direction of the curve and the connecting edge of the other first or second curves comprises a projecting portion (30), the groove and the projecting portion having gaps for the respective slots (16, 18) on the first and second curved elements (12, 14).

6. Shell or shell section according to one of the preceding claims, **characterised in that** the shell (8) is an inner shell with a U-shaped section with the opening of the U pointing towards the centre of the shell so as to form a cavity in which to locate some abradable material and the joint between the first and second curves is approximately towards the centre of the U.

7. Shell or shell section according to one of the preceding claims, **characterised in that** the first and second curved elements (12, 14) each comprise a means of jointing, said means being preferably a snap-on type.

8. Shell or shell section according to the preceding claim, **characterised in that** the means of jointing on these elements (20, 21) are such that they mate with each other elastically and positively where the first and second curved elements (12, 14) meet in a direction approximating to the direction of flow.

9. Shell or shell section according to the preceding claim, **characterised in that** the means of jointing (20, 21) comprise several projections on one of the first or second curves in a direction corresponding approximately to the mating direction of the first and second curved elements.

10. Shell or shell section according to one of claims 4 and 5 and one of the claims 7 to 9, **characterised in that** the means of jointing (20, 21) are arranged under the respective assembly edges (28, 30) of the first and second curved elements.

11. Shell section according to one of the preceding claims, **characterised in that** each end of the shell section comprises a section whose profile corresponds to that of the blade tips so that the junction between two adjacent sections corresponds to the blade profile.

12. Shell section according to the preceding claim, **characterised in that** each end of the shell section includes means for joining to an adjacent section, these connecting means being in positive contact, preferably on both sides of the junction on each of the first and second curved elements.

13. Shell according to one of the preceding claims, **characterised in that** first and second curved elements (12, 14) each have an annular shape, preferably closed.

14. Shell according to one of the preceding claims, **characterised in that** one of the first or second curved elements is annular, preferably closed, and, **in that** it comprises several second curved elements corresponding to shell sections intended to be arranged successively against the annular curved element, grips the profile of the blade roots over the entire circumference of the annulus in each pair of first and second slots.

15. Shell for an axial compressor bladed stator stage comprising several shell sections according to one of the preceding claims.

## Patentansprüche

1. Ring oder Ringabschnitt aus Verbundwerkstoff für Leitapparat mit Schaufeln (4) eines Axialverdichters, wobei der Ring oder Ringabschnitt (8) zur Aufnahme eines Endes der Schaufeln vorgesehen ist;
**dadurch gekennzeichnet, dass** er Folgendes umfasst:
mindestens ein erstes gekrümmtes Element (12) mit mindestens einem ersten Schlitz (16), der mit einem ersten Teil der Kontur des Endes der Schaufeln (4) übereinstimmt;
mindestens ein zweites gekrümmtes Element (14), mit einer dem ersten gekrümmten Element (12) im Allgemeinen ähnlichen Form, mit mindestens einem zweiten Schlitz (18), der mit einem zweiten Teil der Kontur des Endes der Schaufeln übereinstimmt, wobei der oder die ersten und zweiten Schlitze (16, 18) ein oder mehrere Paare von Schlitzen bilden;
wobei das erste und das zweite gekrümmte Element (12, 14) dafür vorgesehen sind, axial so aneinander angeordnet zu werden, dass das Profil des Endes der Schaufeln (4) in jedem Paar der ersten und zweiten Schlitze (16, 18) eingeschlossen wird.

2. Ring oder Ringabschnitt nach dem vorangehenden Anspruch, **dadurch gekennzeichnet, dass** das erste und das zweite gekrümmte Element (12, 14) jeweils eine Montagekante (27, 29) in einer zur Hauptachse des Verdichters senkrechten Ebene umfassen, die beim Zusammenbau der zwei gekrümmten Elemente, bevorzugt durch Annäherung in einer Richtung, die ungefähr der Strömungsrichtung entspricht, in gegenseitigen Kontakt kommen kann.

3. Ring oder Ringabschnitt nach einem der vorangehenden Ansprüche, **dadurch gekennzeichnet, dass** der erste und/oder zweite Teil der Kontur des Endes der Schaufeln (4) ungefähr der Hälfte des Profils des Endes der Schaufeln (4) in der Strömungsrichtung entspricht.

4. Ring oder Ringabschnitt nach einem der vorangehenden Ansprüche, **dadurch gekennzeichnet, dass** das erste gekrümmte Element (12) eine Montagekante (28) umfasst, die mit einer Montagekante (30) des zweiten Segments (14) beim Zusammenbau der zwei gekrümmten Elemente (12, 14), bevorzugt durch Annäherung in einer Richtung, die ungefähr der Strömungsrichtung entspricht, durch Einführung zusammenwirken kann.

5. Ring oder Ringabschnitt nach dem vorangehenden Anspruch, **dadurch gekennzeichnet, dass** die Montagekante eines des ersten und des zweiten Elementes eine Nut (28) entlang der gekrümmten Richtung umfasst und die Montagekante des anderen des ersten und des zweiten Elementes einen überstehenden Teil (30) umfasst, wobei die Nut und der überstehende Teil durch den oder die jeweiligen Schlitze (16, 18) des ersten und des zweiten gekrümmten Elementes (12, 14) unterbrochen sind.

6. Ring oder Ringabschnitt nach einem der vorangehenden Ansprüche, **dadurch gekennzeichnet, dass** der Ring (8) ein Innenring mit einem U-förmigen Querschnitt ist, wobei die Öffnung des U so auf das Zentrum des Rings gerichtet ist, dass ein Hohlraum gebildet wird, der abreibbares Material aufnehmen kann und in dem die Grenze zwischen dem ersten und dem zweiten gekrümmten Element ungefähr in der Mitte des U liegt.

7. Ring oder Ringabschnitt nach einem der vorangehenden Ansprüche, **dadurch gekennzeichnet, dass** das erste und das zweite gekrümmte Element (12, 14), jeweils, gegenseitige Befestigungsmittel (20, 21) umfassen, wobei diese Mittel bevorzugt vom Einschnapptyp sind.

8. Ring oder Ringabschnitt nach dem vorangehenden Anspruch, **dadurch gekennzeichnet, dass** die gegenseitigen Befestigungsmittel (20, 21) so beschaffen sind, dass sie durch elastischen Eingriff von Oberflächen mit formschlüssigem Kontakt bei der Annäherung des ersten und des zweiten gekrümmten Elementes (12,14) in einer Richtung zusammenwirken, die ungefähr der Strömungsrichtung entspricht.

9. Ring oder Ringabschnitt nach dem vorangehenden Anspruch, **dadurch gekennzeichnet, dass** die gegenseitigen Befestigungsmittel (20, 21) mehrere überstehende Teile an einem des ersten und des zweiten gekrümmten Elementes in einer Richtung umfassen, die ungefähr der Annäherungsrichtung des ersten und des zweiten gekrümmten Elementes entspricht.

10. Ring oder Ringabschnitt nach einem der Ansprüche 4 und 5 und einem der Ansprüche 7 bis 9, **dadurch gekennzeichnet, dass** die gegenseitigen Befestigungsmittel (20, 21) unterhalb der jeweiligen Montagekanten (28, 30) des ersten und des zweiten gekrümmten Elementes angeordnet sind.

11. Ringabschnitt nach einem der vorangehenden Ansprüche, **dadurch gekennzeichnet, dass** jedes Ende des Ringabschnitts einen Querschnitt umfasst, dessen Profil mit dem des Endes der Schaufeln so übereinstimmt, dass der Anschluss zwischen zwei benachbarten Abschnitten dem Profil der Schaufel entspricht.

12. Ringabschnitt nach dem vorangehenden Anspruch, **dadurch gekennzeichnet, dass** jedes Ende des Ringabschnitts Verbindungsmittel mit einem benachbarten Abschnitt umfasst, wobei diese Verbindungsmittel mit formschlüssigem Kontakt ausgeführt sind, bevorzugt auf beiden Seiten des Anschlusses an jedem des ersten und des zweiten gekrümmten Elementes.

13. Ringabschnitt nach einem der vorangehenden Ansprüche, **dadurch gekennzeichnet, dass** das erste und das zweite gekrümmte Element (12, 14), jeweils, eine, bevorzugt geschlossene Ringform aufweisen.

14. Ringabschnitt nach einem der vorangehenden Ansprüche, **dadurch gekennzeichnet, dass** eines des ersten und des zweiten gekrümmten Elementes eine, bevorzugt geschlossene Ringform aufweist und dass es mehrere zweite gekrümmte Elemente umfasst, die den Abschnitten des Rings entsprechen und dafür vorgesehen sind, nacheinander an dem gekrümmten Element in Ringform so angeordnet zu werden, dass das Schaufelfußprofil in jedem Paar von ersten und zweiten Schlitzen auf dem ganzen Ringumfang eingeschlossen wird.

15. Ring für Leitapparat mit Schaufeln eines Axialverdichters, der mehrere Ringabschnitte nach einem der vorangehenden Ansprüche umfasst.
